# EUROPEAN PATENT SPECIFICATION

(11) **EP 4 349 699 B1**
(45) Date of publication and mention of the grant of the patent: **19.11.2025**
(21) Application number: 23160402.6
(22) Date of filing: 07.03.2023
(51) Int. Cl.: B62J 45/00, B62J 11/00

(54) **STRADDLED VEHICLE**
GRÄTSCHSITZFAHRZEUG
VÉHICULE À SELLE

(30) Priority: 05.10.2022 JP 2022160676
(43) Date of publication of application: 10.04.2024
(73) Proprietor: Yamaha Hatsudoki Kabushiki Kaisha, Iwata-shi, Shizuoka 438-8501 (JP)
(72) Inventor: OISHI, Nobuaki, Iwata-shi, 4388501 (JP)
(74) Representative: Studio Torta S.p.A.

(56) References cited:
- EP-A1- 3 925 869
- DE-A1- 102020 106 588
- JP-A- 2022 062 939

## Description

### Technical field

The present invention relates to a straddled vehicle.

### Prior Art

There is a type of straddled vehicle including a holder for accommodating a plurality of control units. For example, Japan Laid-open Patent Application Publication No. 2020-147117 discloses a structure for attaching electric components in a straddled vehicle. In the structure for attaching electric components, a first control device and a second control device are accommodated in an upper case that functions as the holder. The first and second control devices are disposed up and down in alignment with each other. The upper case includes a first lock plate and a second lock plate. The first lock plate is disposed between the first and second control devices. The second lock plate is disposed to hold the upper surface of the second control device.

In the structure for attaching electric components described above, the first and second control devices are stably held by the upper case, while being inhibited from dropping out of the upper case. However, the upper case is undesirably increased in size by the first and second lock plates.

As described above, when the holder for accommodating the plural control units is increased in size, the straddled vehicle is undesirably increased in weight or manufacturing cost. Aside from this, the straddled vehicle is undesirably limited in layout of the plural control units by increase in size of the holder. It is an object of the present invention to achieve the following in a straddled vehicle: stably holding a plurality of control units by a common holder and making the holder compact in size.
DE-A-102020106588 discloses a straddled vehicle according to the preamble of claim 1.

### Description of the invention

A straddled vehicle according to an aspect of the present invention includes a first control unit, a second control unit, and a holder. The holder holds together the first and second control units. The holder includes an accommodation space and a first opening. The first and second control units are disposed in the accommodation space. The first opening communicates with the accommodation space and is opened to one lateral side of the holder. The first control unit is disposed to close the first opening.

In the straddled vehicle according to the present aspect, the first and second control units are disposed in the accommodation space of the holder. Then, the first opening of the holder is closed by the first control unit. Because of this, the first control unit functions as a lid for the first opening, whereby the second control unit can be inhibited from being detached and dropping from the holder. Accordingly, the first and second control units are stably held by the holder. Besides, the first control unit functions as the lid for the first opening, whereby the holder is not provided with a lid. Accordingly, the holder is made compact in size.

The holder may include a first sidewall located on an opposite side of the first opening in the holder. The second control unit may be disposed between the first sidewall and the first control unit. In this case, the second control unit can be inhibited from being detached and dropping from the holder by the first sidewall and the first control unit.

The holder may further include a second sidewall extending from the first sidewall toward the first opening. In this case, the first and second control units can be inhibited from being detached and dropping from the case by the second sidewall.

An inner surface of the second sidewall may include a first step portion, disposed to be directed to the first opening. The first control unit may be locked to the first step portion. In this case, the first control unit is set in place by the first step portion. Besides, the first control unit is locked to the first step portion, whereby the first control unit is stably held by the holder even without installation of the second control unit. Because of this, the holder can be used even in a straddled vehicle having a specification without installation of the second control unit.

The first step portion may be disposed to be flush with the second control unit. In this case, the second control unit is tightly disposed between the first control unit and the holder.

The holder may further include a third sidewall. The third sidewall may be disposed on an opposite side of the second sidewall. The third sidewall may extend from the first sidewall toward the first opening. In this case, the first and second control units can be inhibited from being detached and dropping from the holder by the third sidewall.

An inner surface of the third sidewall may include a second step portion, disposed to be directed to the first opening. The first control unit may be locked to the second step portion. In this case, the first control unit is locked to the second step portion, whereby the first control unit is stably held by the holder even without installation of the second control unit. Because of this, the holder can be used even in the straddled vehicle having the specification without installation of the second control unit.

The second step portion may be disposed to be flush with the second control unit. In this case, the second control unit is tightly disposed between the first control unit and the holder.

The holder may further include a second opening opened to an upper side of the holder. In this case, access to the first and second control units is made easy from above the holder.

The first control unit may be greater in size than the second control unit in a view from the first opening. In this case, the second control unit can be further effectively inhibited from being detached and dropping from the holder.

The first control unit may be in contact with the second control unit. In this case, the first and second control units are compactly disposed.

The straddled vehicle may further include an intermediate member. The intermediate member may be disposed between the first and second control units. The intermediate member may be provided as a member separated from the holder. In this case, a thermal insulator material, a buffer material, or so forth can be disposed, as the intermediate member, between the first and second control units.

The holder may be made of resin. In this case, the holder is likely to bend; hence, attaching the first and second control units to the holder is made easy.

The first control unit may be fixed to the holder. In this case, the first control unit can be inhibited from being detached and dropping from the holder.

The straddled vehicle further includes a fixation member that is made of an elastic body and fixes the first control unit to the holder. In this case, fixing the first control unit to the holder is made easy.

### Brief Description of the Drawings

FIG. 1 is a side view of a straddled vehicle according to a preferred embodiment.
FIG. 2 is a side view of a vehicle body frame and a control unit assembly.
FIG. 3 is a perspective view of the control unit assembly.
FIG. 4 is a perspective view of the control unit assembly.
FIG. 5 is a rear view of the control unit assembly.
FIG. 6 is a perspective view of a holder.
FIG. 7 is a perspective view of the holder.
FIG. 8 is a front view of the holder.
FIG. 9 is a rear view of the holder.
FIG. 10 is a cross-sectional view of FIG. 8 taken along line X-X.
FIG. 11 is a rear view of the control unit assembly from which a first control unit is omitted.
FIG. 12 is a cross-sectional view of the control unit assembly from which a second control unit is omitted.
FIG. 13 is a cross-sectional view of a control unit assembly according to a modification.

### Embodiments of the invention

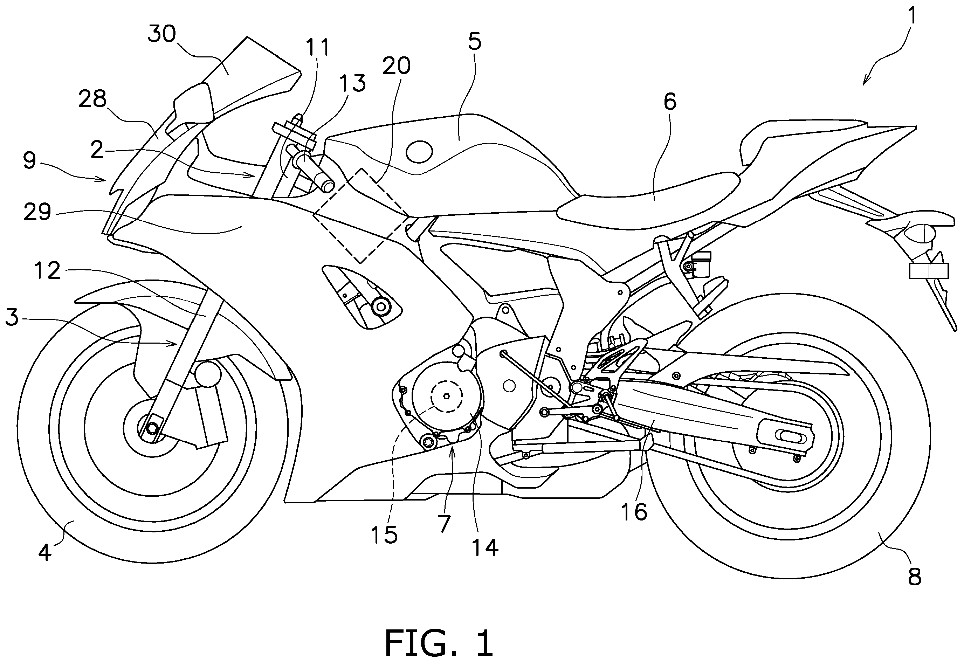

A preferred embodiment will be hereinafter explained with reference to drawings. FIG. 1 is a side view of a straddled vehicle 1 according to the preferred embodiment. The straddled vehicle 1 according to the present preferred embodiment is a motorcycle. The straddled vehicle 1 includes a vehicle body frame 2, a steering device 3, a front wheel 4, a fuel tank 5, a seat 6, a power unit 7, a rear wheel 8, and a vehicle body cover 9.

The vehicle body frame 2 includes a head pipe 11. The head pipe 11 supports the steering device 3 such that the steering device 3 is made turnable right and left. The steering device 3 includes a front fork 12 and a handle member 13. The front fork 12 supports the front wheel 4 such that the front wheel 4 is made rotatable. The handle member 13 is connected to an upper portion of the front fork 12.

The fuel tank 5 is disposed behind the head pipe 11. The seat 6 is disposed behind the fuel tank 5. The power unit 7 is disposed below the seat 6. The power unit 7 includes an engine 14 and a motor 15. The motor 15 is a starter motor for starting the engine 14. The motor 15 may be an ISG (Integrated Starter Generator) functioning as both a starter and a generator. The rear wheel 8 is supported by the vehicle body frame 2 or the power unit 7 through a swing arm 16. The rear wheel 8 is supported by the swing arm 16 so as to be rotatable.

The vehicle body cover 9 covers part of the vehicle body frame 2. The vehicle body cover 9 includes a front cover 28 and a side cover 29. The front cover 28 is disposed in front of the head pipe 11. A screen 30 is attached to the front cover 28. The side cover 29 covers the vehicle body frame 2 from lateral sides.

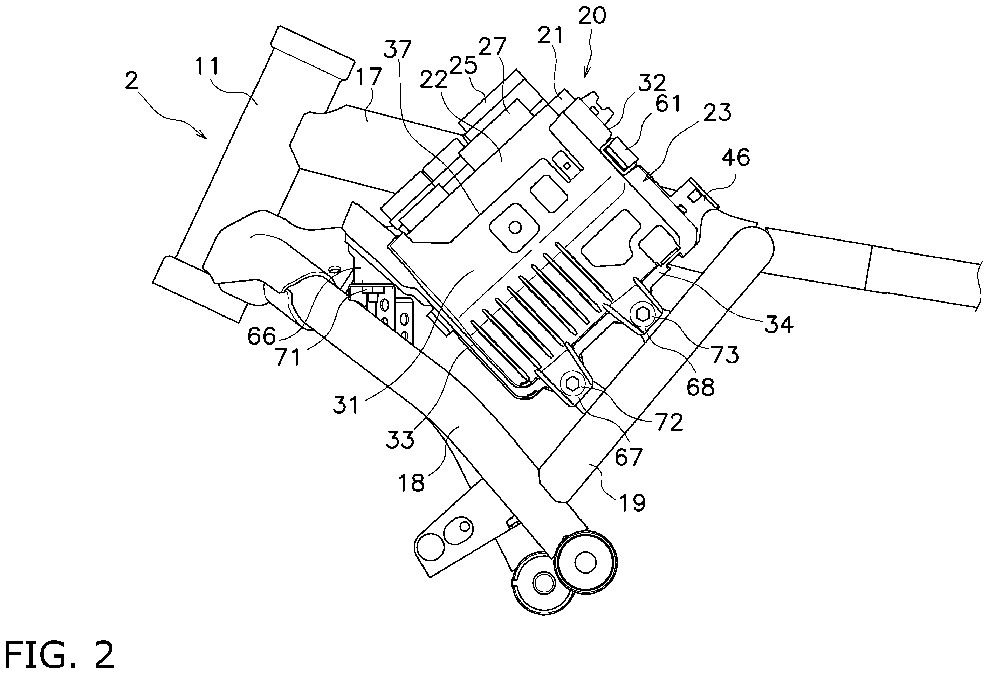

The straddled vehicle 1 includes a control unit assembly 20. FIG. 2 is a side view of the vehicle body frame 2 and the control unit assembly 20. As shown in FIG. 2, the vehicle body frame 2 includes a first frame 17, a second frame 18, and a third frame 19. The first frame 17 is connected to the head pipe 11. The first frame 17 extends rearward from the head pipe 11. The second frame 18 is disposed below the first frame 17. The second frame 18 is connected to the head pipe 11. The second frame 18 extends rearward and downward from the head pipe 11. The third frame 19 is connected to the first and second frames 17 and 18.

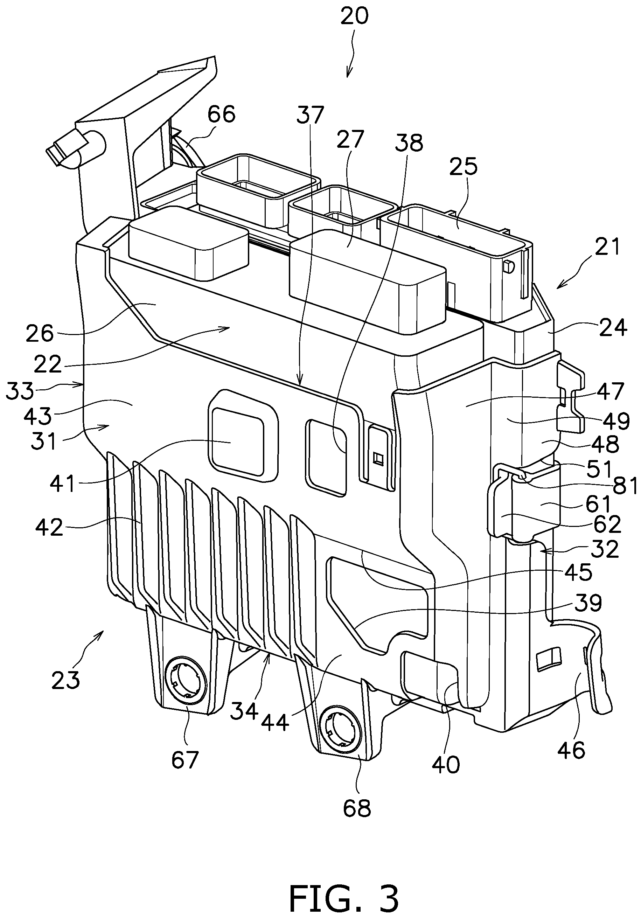

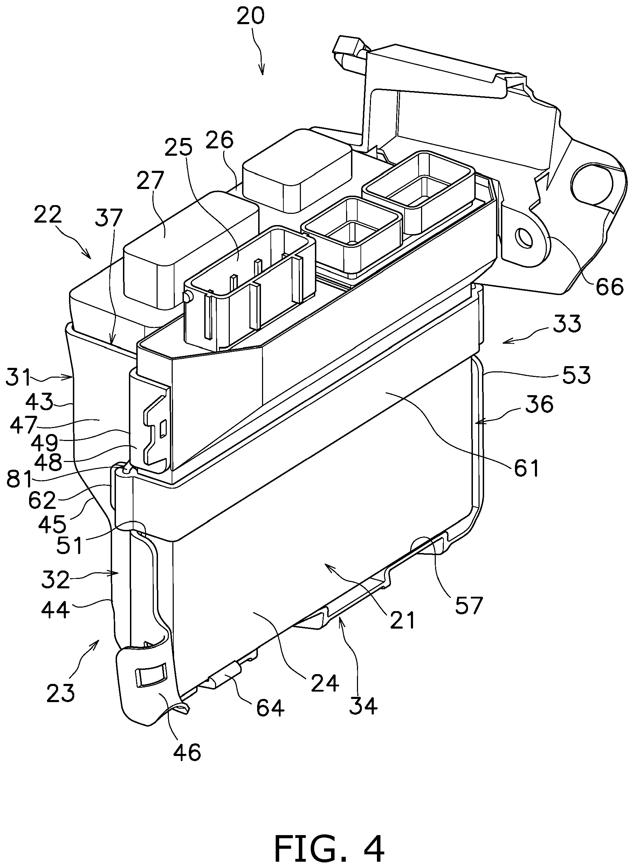

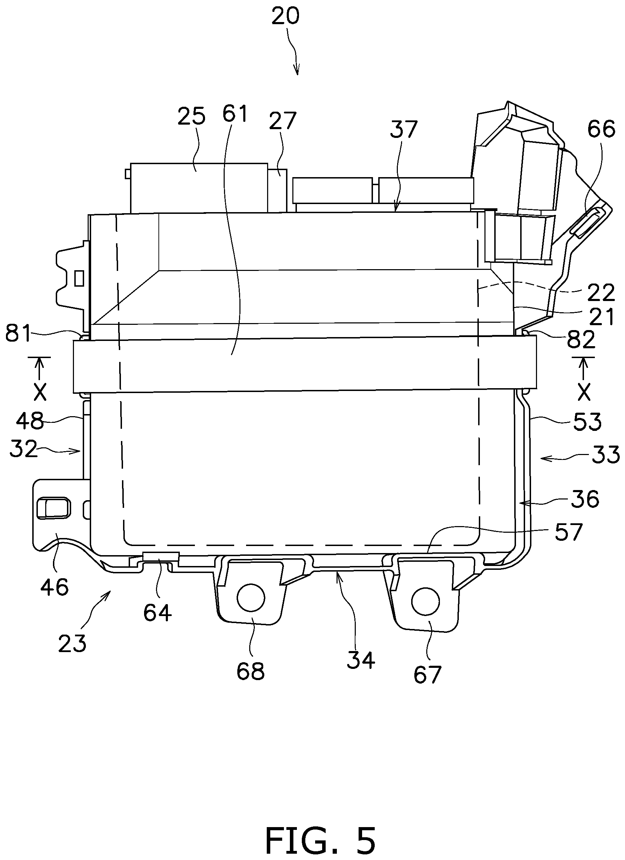

The control unit assembly 20 is attached to the vehicle body frame 2. When described in detail, the control unit assembly 20 is attached to the second and third frames 18 and 19. The control unit assembly 20 is disposed inside the side cover 29. FIGS. 3 and 4 are perspective views of the control unit assembly 20. FIG. 5 is a rear view of the control unit assembly 20. As shown in FIGS. 3 to 5, the control unit assembly 20 includes a first control unit 21, a second control unit 22, and a holder 23.

The first control unit 21 is an ECU (Engine Control Unit). The first control unit 21 electrically controls the engine 14. For example, the first control unit 21 controls fuel injection and ignition timing in the engine 14. As shown in FIGS. 3 and 4, the first control unit 21 includes a first case 24 and a plurality of connectors 25. The first case 24 accommodates an electronic circuit (not shown in the drawings) for controlling the engine 14. The plural connectors 25 protrude from the first case 24. It should be noted that in the drawings, reference numeral 25 is assigned to only part of the plural connectors without being assigned to the other connectors.

The second control unit 22 is an MCU (Motor Control Unit). The second control unit 22 electrically controls the motor 15. The second control unit 22 includes a second case 26 and a plurality of connectors 27. The second case 26 accommodates an electronic circuit (not shown in the drawings) for controlling the motor 15. The plural connectors 27 protrude from the second case 26. It should be noted that in the drawings, reference numeral 27 is assigned to only part of the plural connectors without being assigned to the other connectors.

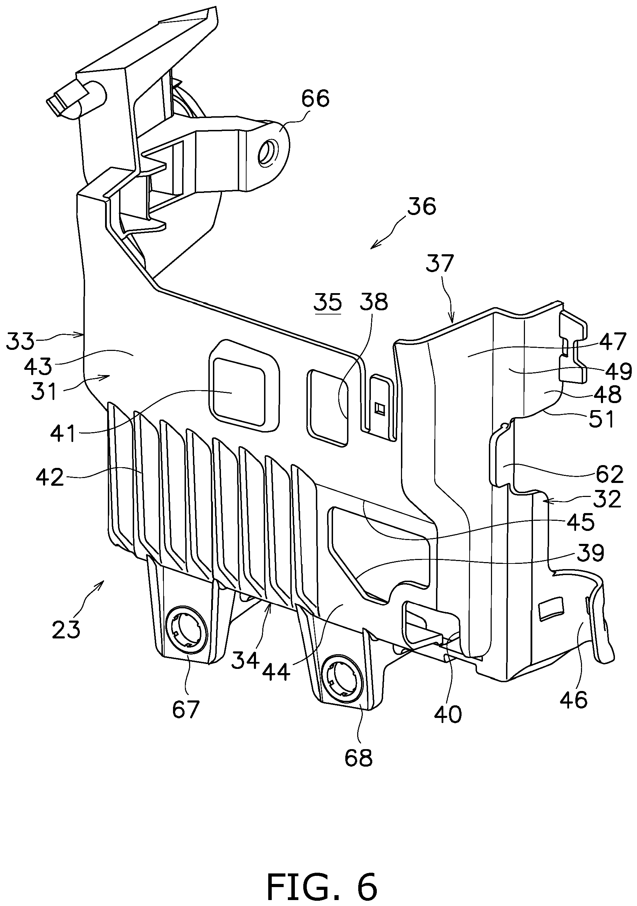

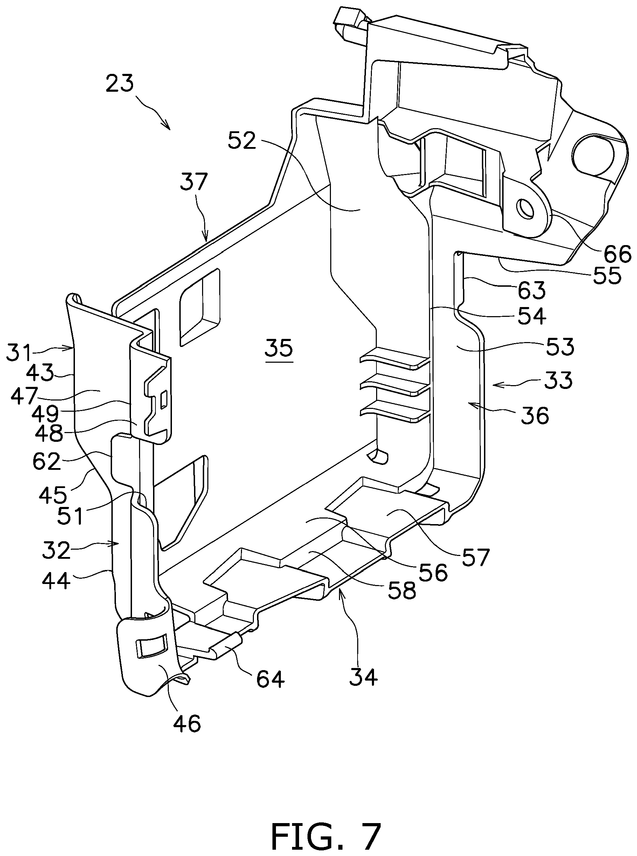

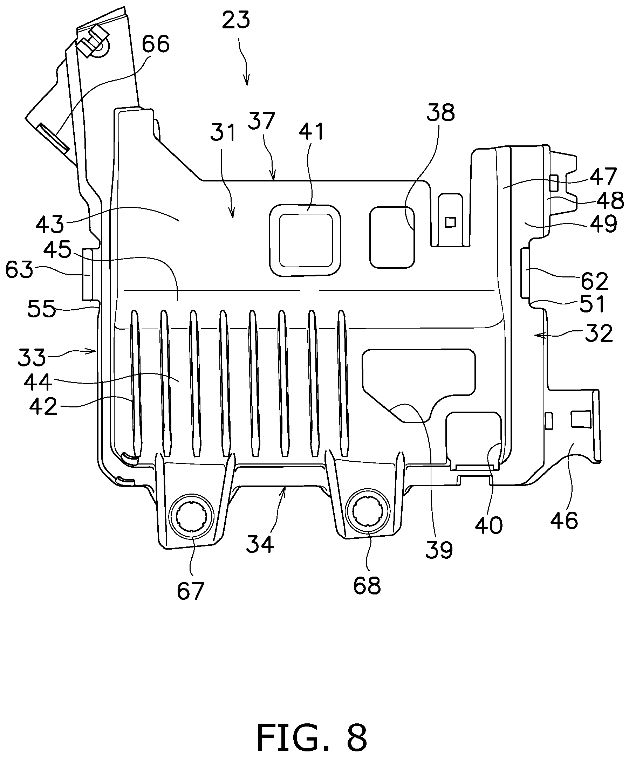

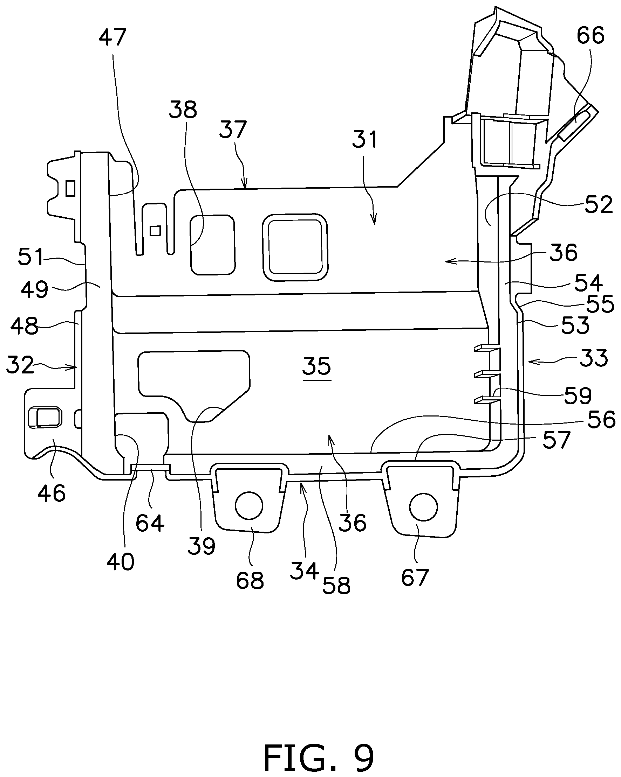

The holder 23 holds together the first and second control units 21 and 22. The holder 23 is made of resin. For example, the holder 23 is provided as an integrated component. FIGS. 6 and 7 are perspective views of the holder 23. FIG. 8 is a front view of the holder 23. FIG. 9 is a rear view of the holder 23.

As shown in FIGS. 6 to 9, the holder 23 includes a first sidewall 31, a second sidewall 32, a third sidewall 33, a bottom surface 34, an accommodation space 35, a first opening 36, and a second opening 37. It should be noted that in the following explanation, a direction facing a side on which the bottom surface 34 is located in the holder 23 is defined as "downward", whereas a direction opposite thereto is defined as "upward". A direction facing a side on which the first sidewall 31 is located in the holder 23 is defined as "forward", whereas a direction opposite thereto is defined as "rearward". A direction facing a side on which the second sidewall 32 is located in the holder 23 is defined as "leftward", whereas a direction opposite thereto is defined as "rightward".

The accommodation space 35 is enclosed by the first sidewall 31, the second sidewall 32, the third sidewall 33, and the bottom surface 34. The first and second control units 21 and 22 are disposed in the accommodation space 35. The first and second control units 21 and 22 are disposed together, in common, in the accommodation space 35 without being partitioned off.

The first opening 36 communicates with the accommodation space 35. The first opening 36 is opened rearward in the holder 23. The rear surface of the holder 23 is entirely opened as the first opening 36. The second opening 37 communicates with the accommodation space 35. The second opening 37 is opened upward in the holder 23. The top surface of the holder 23 is entirely opened as the second opening 37.

The first sidewall 31 is located on the opposite side of the first opening 36 in the holder 23. The first sidewall 31 is disposed in opposition to the first opening 36. The first sidewall 31 is greater in area than each of the second sidewall 32, the third sidewall 33, and the bottom surface 34. The first sidewall 31 includes holes 38 to 40. The first sidewall 31 includes a protrusion 41. The protrusion 41 protrudes outward from the first sidewall 31 of the holder 23. The protrusion 41 is shaped to be recessed on the inner surface of the first sidewall 31. The first sidewall 31 includes a plurality of ribs 42. The plural ribs 42 protrude from the outer surface of the first sidewall 31. Each of the plural ribs 42 extends in the up-and-down direction of the holder 23. It should be noted that in the drawings, reference numeral 42 is assigned to only part of the plural ribs without being assigned to the other ribs.

The first sidewall 31 includes an upper surface portion 43, a lower surface portion 44, and a front step portion 45. The lower surface portion 44 is disposed below the upper surface portion 43. The lower surface portion 44 is disposed further on a rear side than the upper surface portion 43. As shown in FIG. 4, the front step portion 45 is disposed between the upper surface portion 43 and the lower surface portion 44. The front step portion 45 extends forward from the lower surface portion 44 toward the upper surface portion 43. In the first sidewall 31, the front step portion 45 extends in the right-and-left direction. The hole 38 is disposed in the upper surface portion 43. The holes 39 and 40 are disposed in the lower surface portion 44. The protrusion 41 is disposed on the upper surface portion 43. The plural ribs 42 are disposed on the lower surface portion 44. The plural ribs 42 extend downward from the front step portion 45.

The second sidewall 32 extends rearward from the first sidewall 31. The second sidewall 32 extends from the first sidewall 31 toward the first opening 36. The second sidewall 32 extends upward from the bottom surface 34. The second sidewall 32 extends from the bottom surface 34 toward the second opening 37. A cable guide 46 is connected to the second sidewall 32. The cable guide 46 guides cables (not shown in the drawings) connected to the connectors 25 or the connectors 27. The second sidewall 32 includes a first front portion 47, a first rear portion 48, and a first step portion 49.

The first front portion 47 is connected to the first sidewall 31. The first rear portion 48 is disposed behind the first front portion 47. The first rear portion 48 is disposed laterally outward of the first front portion 47. The first step portion 49 is disposed between the first front portion 47 and the first rear portion 48. The first step portion 49 is disposed to be directed to the first opening 36. The first step portion 49 extends laterally outward from the first front portion 47 toward the first rear portion 48. In the second sidewall 32, the first step portion 49 extends in the up-and-down direction. The second sidewall 32 includes a first cutout 51. The first cutout 51 extends forward from the rear edge of the second sidewall 32. The first control unit 21 is exposed to the outside of the holder 23 through the first cutout 51.

The third sidewall 33 is disposed on the opposite side of the second sidewall 32. The third sidewall 33 extends rearward from the first sidewall 31. The third sidewall 33 extends from the first sidewall 31 toward the first opening 36. The third sidewall 33 extends upward from the bottom surface 34. The third sidewall 33 extends from the bottom surface 34 toward the second opening 37. As shown in FIGS. 7 and 9, the third sidewall 33 includes a second front portion 52, a second rear portion 53, and a second step portion 54.

The second front portion 52 is connected to the first sidewall 31. The second rear portion 53 is disposed behind the second front portion 52. The second rear portion 53 is disposed laterally outward of the second front portion 52. The second step portion 54 is disposed between the second front portion 52 and the second rear portion 53. The second step portion 54 is disposed to be directed to the first opening 36. The second step portion 54 extends laterally outward from the second front portion 52 toward the second rear portion 53. In the third sidewall 33, the second step portion 54 extends in the up-and-down direction. The third sidewall 33 includes a second cutout 55. The second cutout 55 extends forward from the rear edge of the third sidewall 33. The first control unit 21 is exposed to the outside of the holder 23 through the second cutout 55.

The bottom surface 34 extends rearward from the first sidewall 31. In the holder 23, the bottom surface 34 extends in the right-and-left direction. As shown in FIG. 7, the bottom surface 34 includes a third front portion 56, a third rear portion 57, and a third step portion 58. The third front portion 56 is connected to the first sidewall 31. The third rear portion 57 is disposed behind the third front portion 56. The third rear portion 57 is disposed further on a lower side than the third front portion 56. The third step portion 58 is disposed between the third front portion 56 and the third rear portion 57. The third step portion 58 extends downward from the third front portion 56 toward the third rear portion 57. In the bottom surface 34, the third step portion 58 extends in the right-and-left direction.

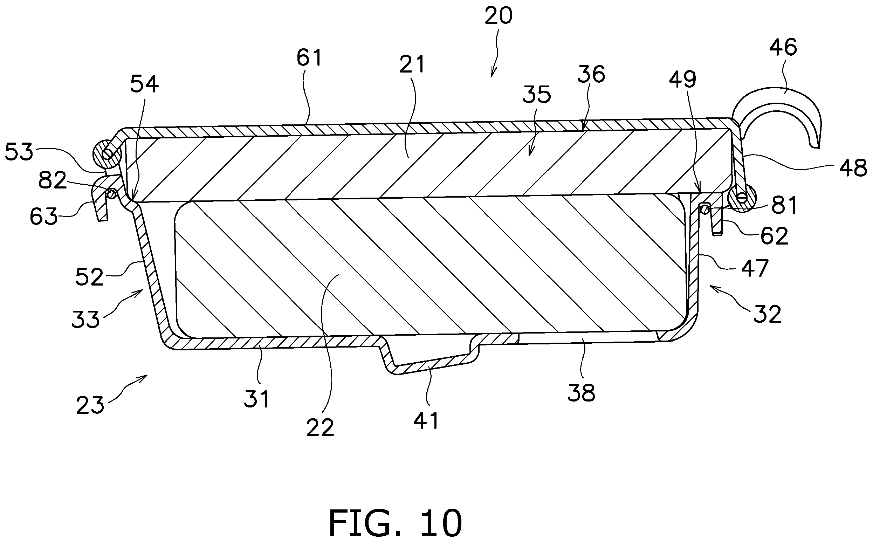

FIG. 10 is a cross-sectional view of FIG. 8 taken along line X-X. As shown in FIGS. 3, 4, and 10, the first control unit 21 is disposed to close the first opening 36. The second control unit 22 is disposed between the first sidewall 31 and the first control unit 21. The first and second control units 21 and 22 are disposed to be stacked back and forth in the accommodation space 35. The first and second control units 21 and 22 do not interpose the holder 23 therebetween. The first and second control units 21 and 22 are in contact with each other.

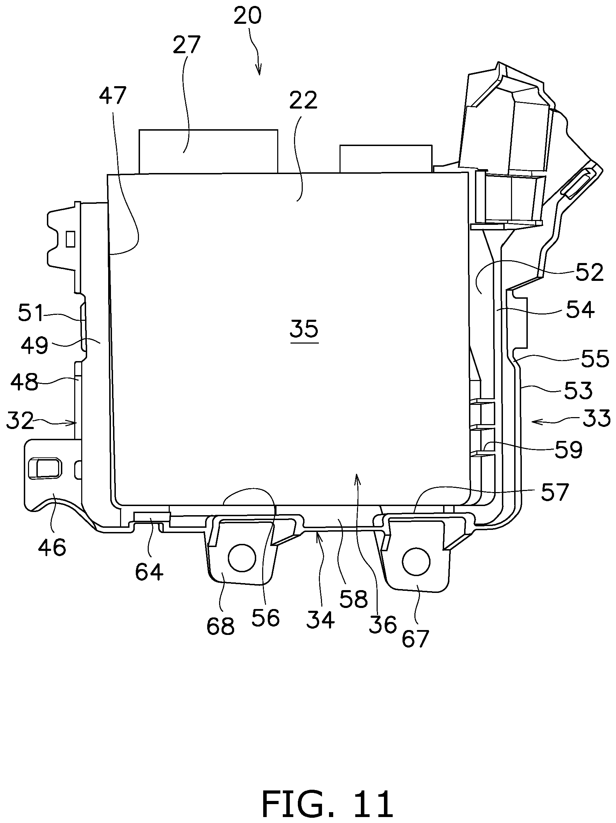

FIG. 11 is a rear view of the control unit assembly 20, from which the first control unit 21 is omitted. As shown in FIG. 11, the second control unit 22 is disposed between the first front portion 47 of the second sidewall 32 and the second front portion 52 of the third sidewall 33. The second control unit 22 is disposed on the third front portion 56 of the bottom surface 34. The third sidewall 33 includes a plurality of positioning ribs 59 protruding from the inner surface of the second front portion 52. The second control unit 22 is set in place by the plural positioning ribs 59 in the interior of the holder 23. It should be noted that in the drawings, reference numeral 59 is assigned to only part of the plural positioning ribs without being assigned to the other positioning ribs. As shown in FIG. 10, the first step portion 49 is disposed to be flush with the second control unit 22. The second step portion 54 is disposed to be flush with the second control unit 22.

As shown in FIG. 5, in the rear view of the holder 23, the first opening 36 is greater in size than the first control unit 21. In the rear view of the holder 23, the first control unit 21 is greater in size than the second control unit 22. When described in detail, in the rear view of the holder 23, the first control unit 21 is greater in size than the second control unit 22 in the right-and-left direction. In the rear view of the holder 23, the first control unit 21 is greater in size than the second control unit 22 in the up-and-down direction.

The first control unit 21 is disposed between the first rear portion 48 of the second sidewall 32 and the second rear portion 53 of the third sidewall 33. The first control unit 21 is disposed on the third rear portion 57 of the bottom surface 34. The first control unit 21 is engaged to the first step portion 49 of the second sidewall 32. The first control unit 21 is engaged to the second step portion 54 of the third sidewall 33. The first control unit 21 is engaged to the third step portion 58 of the bottom surface 34.

The first control unit 21 is fixed to the holder 23. Accordingly, the first control unit 21 functions as a lid for the first opening 36. When described in detail, the control unit assembly 20 includes a fixation member 61 made of an elastic body so as to fix the first control unit 21 to the holder 23. The fixation member 61 is disposed to be stretched between the second and third sidewalls 32 and 33. The fixation member 61 is locked to the second and third sidewalls 32 and 33 and is thereby fixed to the holder 23. The fixation member 61 is a band made of an elastic body.

As shown in FIG. 8, the second sidewall 32 includes a first lock pawl 62. The first lock pawl 62 is disposed in front of the first cutout 51. The third sidewall 33 includes a second lock pawl 63. The second lock pawl 63 is disposed in front of the second cutout 55. The fixation member 61 is engaged to the first and second lock pawls 62 and 63. As shown in FIG. 10, the fixation member 61 is provided with hooks 81 and 82 attached to both ends thereof, respectively. The hooks 81 and 82 are engaged to the first and second lock pawls 62 and 63, respectively. The fixation member 61 is in contact with the first control unit 21, while penetrating the first and second cutouts 51 and 55.

The first control unit 21 is pressed toward the first to third step portions 49, 54, and 58 by the elastic force of the fixation member 61; hence, the first control unit 21 is in contact with the first to third step portions 49, 54, and 58. Accordingly, the first control unit 21 is fixed to the holder 23. Besides, as shown in FIGS. 4 and 7, the bottom surface 34 includes a lock pawl 64. The lock pawl 64 is locked to the first control unit 21, whereby a bottom part of the first control unit 21 is restricted from moving rearward.

As shown in FIG. 2, the control unit assembly 20 is disposed laterally outside the first frame 17. The control unit assembly 20 is disposed such that the first sidewall 31 is directed to the laterally outer side of the straddled vehicle 1. In other words, the control unit assembly 20 is disposed such that the first opening 36 is directed to the laterally inner side of the straddled vehicle 1. The control unit assembly 20 is fixed to the second and third frames 18 and 19.

As shown in FIG. 5, the holder 23 includes a first fixed portion 66, a second fixed portion 67, and a third fixed portion 68. The first fixed portion 66 is connected to the third sidewall 33. As shown in FIG. 2, the first fixed portion 66 is attached to the second frame 18. The first fixed portion 66 is fixed to the second frame 18 by a bolt 17. The second fixed portion 67 is connected to the bottom surface 34. As shown in FIG. 2, the second fixed portion 67 is fixed to the third frame 19. The second fixed portion 67 is fixed to the third frame 19 by a bolt 72. The third fixed portion 68 is connected to the bottom surface 34 in similar manner to the second fixed portion 67. As shown in FIG. 2, the third fixed portion 68 is attached to the third frame 19. The third fixed portion 68 is fixed to the third frame 19 by a bolt 73.

In the straddled vehicle 1 according to the present preferred embodiment explained above, the first and second control units 21 and 22 are disposed in the accommodation space 35 of the holder 23. Then, the first opening 36 of the holder 23 is closed by the first control unit 21. Because of this, the first control unit 21 functions as a lid for the first opening 36, whereby the second control unit 22 can be inhibited from being detached and dropping from the holder 23. Accordingly, the first and second control units 21 and 22 are stably held by the holder 23. Besides, the first control unit 21 functions as the lid for the first opening 36, whereby the holder 23 is not provided with a lid. Accordingly, the holder 23 is made compact in size.

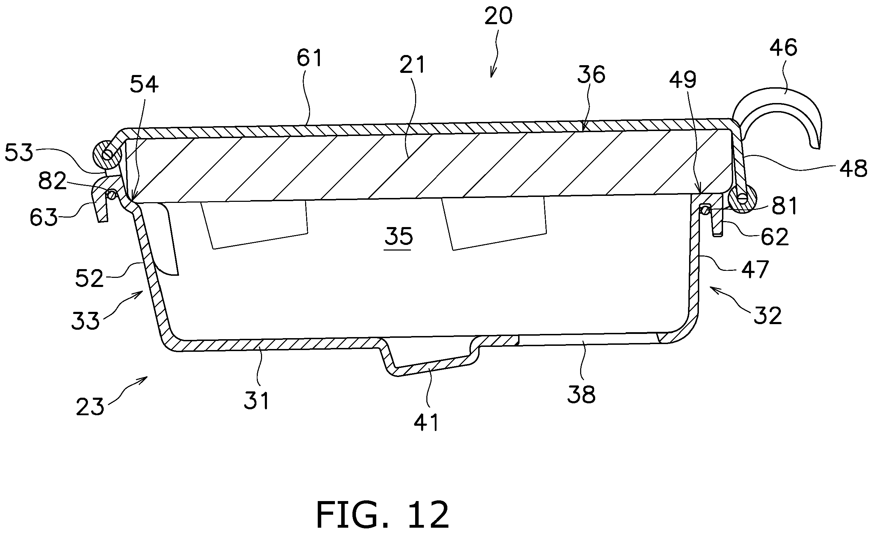

The first control unit 21 is in contact with the first and second step portions 49 and 54, while being fixed to the holder 23 by the fixation member 61. Because of this, as shown in FIG. 12, even when the second control unit 22 is omitted, only the first control unit 21 can be held in the holder 23 by the fixation member 61. Accordingly, the holder 23 is made compatible with a straddled vehicle having a specification with installation of both the first and second control units 21 and 22 and a straddled vehicle having a specification without installation of the second control unit 22.

One preferred embodiment of the present invention has been explained above. However, the present invention is not limited to the preferred embodiment described above, and a variety of changes can be made without departing from the scope of protection of the appended claims.

The straddled vehicle 1 is not limited to a type of vehicle in the preferred embodiment described above, and alternatively, may be another type of straddled vehicle such as an off-road motorcycle, a scooter, or a moped. The positional arrangement of the control unit assembly 20 in the straddled vehicle 1 is not limited to that in the preferred embodiment described above and may be changed. For example, the control unit assembly 20 may be disposed behind the front cover 28. The control unit assembly 20 may be disposed below the seat 6. Alternatively, the control unit assembly 20 may be disposed further on a rear side than the seat 6.

The first control unit 21 is not limited to the ECU and may be another type of control unit. The second control unit 22 is not limited to the MCU and may be another type of control unit. The second control unit 22 is not limited to the type of control unit for controlling the starter motor; alternatively, the second control unit 22 may be a type of control unit for controlling another type of motor such as a motor for assisting the drive force of the engine 14, a motor for controlling the electronic throttle of the engine 14, or a motor for moving the screen 30.

The shape of the first control unit 21 and that of the second control unit 22 are not limited to those in the preferred embodiment described above and may be changed. For example, the first and second control units 21 and 22 may be equal in size to each other. Alternatively, the first control unit 21 may be lesser in size than the second control unit 22.

The structure of the holder 23 is not limited to that in the preferred embodiment described above and may be changed. For example, the ribs or the holes may be omitted. The fixation portions 66 to 68 for fixing the holder 23 to the vehicle body frame 2 may be changed in position or number. The means for fixing the first control unit 21 to the holder 23 is not limited to the fixation member 61, and alternatively, may be another fixation means such as screws or snap-fits.

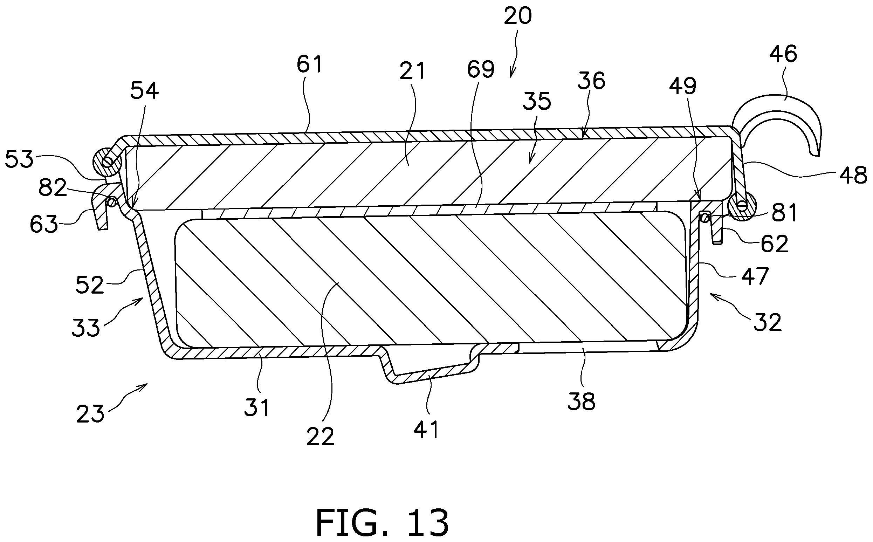

In the preferred embodiment described above, nothing is disposed between the first and second control units 21 and 22. However, as shown in FIG. 13, an intermediate member 69, provided as a member separated from the holder 23, may be disposed between the first and second control units 21 and 22. For example, the intermediate member 69 may be a thermal insulator material. Alternatively, the intermediate member 69 may be a buffer material.

### REFERENCE SIGNS LIST

21: First control unit
22: Second control unit
23: Holder
31: First sidewall
32: Second sidewall
33: Third sidewall
35: Accommodation space
36: First opening
37: Second opening
49: First step portion
54: Second step portion
61: Fixation member
69: Intermediate member

## Claims

1. A straddled vehicle (1) comprising:
a first control unit (21);
a second control unit (22); and
a holder (23) holding together the first control unit (21) and the second control unit (22), wherein
the holder (23) includes
an accommodation space (35) in which the first control unit (21) and the second control unit (22) are disposed, and
a first opening (36) communicating with the accommodation space (35), the first opening (36) opened to one lateral side of the holder (23), and
the first control unit (21) is disposed to close the first opening (36);
**characterized by** comprising a band (61) made of an elastic body and fixing the first control unit (21) to the holder (23);
the band (61) being stretched is disposed to be stretched between a second sidewall (32) and a third sidewall (33), the band (61) is locked to said second sidewall (32) and the third sidewall (33) and is thereby fixed to said holder (23);
the second sidewall (32) including a first lock pawl (62), the first lock pawl (62) is disposed in front of a first cutout (51);
the third sidewall (33) including a second lock pawl (63);
the second lock pawl (63) being disposed in front of a second cutout (55);
said band (61) being engaged to said first lock pawl (62) and the second lock pawl (63);
said band (61) being provided with hooks (81, 82) attached to both ends thereof, respectively;
said hooks (81, 82) being engaged to said first lock pawl (61) and second lock pawl (63), respectively;
said band (61) being in contact with said first control unit (21), while penetrating the first and second cutouts (51, 55).

2. The straddled vehicle according to claim 1, wherein
the holder (23) includes a first sidewall (31) located on an opposite side of the first opening (36) in the holder (23), and
the second control unit (22) is disposed between the first sidewall (31) and the first control unit (21).

3. The straddled vehicle according to claim 2, wherein the holder (23) further includes the second sidewall (32) extending from the first sidewall (31) toward the first opening (36).

4. The straddled vehicle according to claim 3, wherein
an inner surface of the second sidewall (32) includes a first step portion (49) disposed to be directed to the first opening (36), and
the first control unit (21) is locked to the first step portion (49).

5. The straddled vehicle according to claim 4, wherein the first step portion (49) is disposed to be flush with the second control unit (22).

6. The straddled vehicle according to any one of claims 3 to 5, wherein the holder (23) further includes the third sidewall (33) disposed on an opposite side of the second sidewall (32) and extending from the first sidewall (31) toward the first opening (36).

7. The straddled vehicle according to claim 6, wherein
an inner surface of the third sidewall (31) includes a second step portion (54) disposed to be directed to the first opening (36), and
the first control unit (21) is locked to the second step portion (54).

8. The straddled vehicle according to claim 7, wherein the second step portion (54) is disposed to be flush with the second control unit (22).

9. The straddled vehicle according to any one of claims 1 to 8, wherein the holder (23)further includes a second opening (37) opened to an upper side of the holder (23).

10. The straddled vehicle according to any one of claims 1 to 9, wherein the first control unit (21) is greater in size than the second control unit (22) in a view from the first opening (36).

11. The straddled vehicle according to any one of claims 1 to 10, wherein the first control unit (21) is in contact with the second control unit (22).

12. The straddled vehicle according to any one of claims 1 to 11, further comprising:
an intermediate member (69) disposed between the first and second control units (21, 22) and provided as a member separated from the holder (23).

13. The straddled vehicle according to any one of claims 1 to 12, wherein the holder (23) is made of resin.

14. The straddled vehicle according to any one of claims 1 to 13, wherein the first control unit (21) is fixed to the holder (23).

## Patentansprüche

1. Spreizsitz-Fahrzeug (1), das umfasst:
eine erste Steuerungs-Einheit (21);
eine zweite Steuerungs-Einheit (22); sowie
eine Halterung (23), die die erste Steuerungs-Einheit (21) und die zweite Steuerungs-Einheit (22) zusammenhält, wobei die Halterung (23) einschließt:
einen Aufnahmeraum (35), in dem die erste Steuerungs-Einheit (21) und die zweite Steuerungs-Einheit (22) angeordnet sind, sowie
eine erste Öffnung (36), die mit dem Aufnahmeraum (35) in Verbindung steht, wobei sich die erste Öffnung (36) an einer Längsseite der Halterung (23) öffnet, und die erste Steuerungs-Einheit (21) nahe an der ersten Öffnung (36) angeordnet ist;
**dadurch gekennzeichnet, dass** sie ein Band (61) umfasst, das aus einem elastischen Körper besteht und die erste Steuerungs-Einheit (21) an der Halterung (23) befestigt; wobei das Band (61) in gedehntem Zustand so angeordnet ist, dass es zwischen einer zweiten Seitenwand (32) und einer dritten Seitenwand (33) gedehnt ist, und das Band (61) an der zweiten Seitenwand (32) sowie der dritten Seitenwand (33) arretiert und damit an der Halterung (23) befestigt ist;
die zweite Seitenwand (32) einen ersten Sperrriegel (62) enthält, wobei der erste Sperrriegel (62) vor einem ersten Ausschnitt (51) angeordnet ist;
die dritte Seitenwand (33) einen zweiten Sperrriegel (63) enthält;
der zweite Sperrriegel (63) vor einem zweiten Ausschnitt (55) angeordnet ist;
das Band (61) mit dem ersten Sperrriegel (62) und dem zweiten Sperrriegel (63) in Eingriff ist;
das Band (61) mit Haken (81, 82) versehen ist, die jeweils an beiden Enden desselben angebracht sind;
die Haken (81, 82) mit dem ersten Sperrriegel (61) bzw. dem zweiten Sperrriegel (63) in Eingriff sind;
das Band (61) in Kontakt mit der ersten Steuerungs-Einheit (21) ist und sich dabei durch den ersten sowie den zweiten Ausschnitt (51, 55) hindurch erstreckt.

2. Spreizsitz-Fahrzeug nach Anspruch 1, wobei
die Halterung (23) eine erste Seitenwand (31) enthält, die sich an einer der ersten Öffnung (36) in der Halterung (23) gegenüberliegenden Seite befindet, und
die zweite Steuerungs-Einheit (22) zwischen der ersten Seitenwand (31) und der ersten Steuerungs-Einheit (21) angeordnet ist.

3. Spreizsitz-Fahrzeug nach Anspruch 2, wobei die Halterung (23) des Weiteren die zweite Seitenwand (32) einschließt, die sich von der ersten Seitenwand (31) auf die erste Öffnung (36) zu erstreckt.

4. Spreizsitz-Fahrzeug nach Anspruch 3, wobei
eine Innenfläche der zweiten Seitenwand (32) einen ersten Absatzabschnitt (49) einschließt, der so angeordnet ist, dass er zu der ersten Öffnung (36) gerichtet ist, und
die erste Steuerungs-Einheit (21) an dem ersten Absatzabschnitt (49) arretiert ist.

5. Spreizsitz-Fahrzeug nach Anspruch 4, wobei der erste Absatzabschnitt (49) so angeordnet ist, dass er bündig mit der zweiten Steuerungs-Einheit (22) ist.

6. Spreizsitz-Fahrzeug nach einem der Ansprüche 3 bis 5, wobei die Halterung (23) des Weiteren die dritte Seitenwand (33) einschließt, die an einer der zweiten Seitenwand (32) gegenüberliegenden Seite angeordnet ist und sich von der ersten Seitenwand (31) auf die erste Öffnung (36) zu erstreckt.

7. Spreizsitz-Fahrzeug nach Anspruch 6, wobei
eine Innenfläche der dritten Seitenwand (31) einen zweiten Absatzabschnitt (54) einschließt, der so angeordnet ist, dass er zu der ersten Öffnung (36) gerichtet ist, und
die erste Steuerungs-Einheit (21) an dem zweiten Absatzabschnitt (54) arretiert ist.

8. Spreizsitz-Fahrzeug nach Anspruch 7, wobei der zweite Absatzabschnitt (54) so angeordnet ist, dass er bündig mit der zweiten Steuerungs-Einheit (22) ist.

9. Spreizsitz-Fahrzeug nach einem der Ansprüche 1 bis 8, wobei die Halterung (23) des Weiteren eine zweite Öffnung (37) einschließt, die sich zu einer oberen Seite der Halterung (23) öffnet.

10. Spreizsitz-Fahrzeug nach einem der Ansprüche 1 bis 9, wobei die erste Steuerungs-Einheit (21), in einer Ansicht von der ersten Öffnung (1) aus, größer ist als die zweite Steuerungs-Einheit (22).

11. Spreizsitz-Fahrzeug nach einem der Ansprüche 1 bis 10, wobei die erste Steuerungseinheit (21) in Kontakt mit der zweiten Steuerungs-Einheit (22) ist.

12. Spreizsitz-Fahrzeug nach einem der Ansprüche 1 bis 11, das des Weiteren umfasst:
ein Zwischenelement (69), das zwischen der ersten und der zweiten Steuerungs-Einheit (21, 22) angeordnet ist und ein von der Halterung (23) getrenntes Element bildet.

13. Spreizsitz-Fahrzeug nach einem der Ansprüche 1 bis 12, wobei die Halterung (23) aus Kunststoff besteht.

14. Spreizsitz-Fahrzeug nach einem der Ansprüche 1 bis 13, wobei die erste Steuerungseinheit (21) an der Halterung (23) befestigt ist.

## Revendications

1. Véhicule à selle (1) comprenant :
une première unité de commande (21) ;
une deuxième unité de commande (22) ; et
un support (23) maintenant ensemble la première unité de commande (21) et la deuxième unité de commande (22), dans lequel le support (23) comprend
un espace de logement (35) dans lequel sont disposées la première unité de commande (21) et la deuxième unité de commande (22), et
une première ouverture (36) communiquant avec l'espace de logement (35), la première ouverture (36) étant ouverte sur un côté latéral du support (23), et
la première unité de commande (21) est disposée de manière à fermer la première ouverture (36) ;
**caractérisé en ce qu'**il comprend une bande (61) constituée d'un corps élastique et fixant la première unité de commande (21) au support (23) ;
la bande (61) étant étirée est disposée de manière à être étirée entre une deuxième paroi latérale (32) et une troisième paroi latérale (33), la bande (61) est verrouillée sur ladite deuxième paroi latérale (32) et ladite troisième paroi latérale (33) et est ainsi fixée audit support (23) ;
la deuxième paroi latérale (32) comprenant un premier cliquet de verrouillage (62), le premier cliquet de verrouillage (62) est disposé devant une première découpe (51) ;
la troisième paroi latérale (33) comprenant un deuxième cliquet de verrouillage (63) ;
le deuxième cliquet de verrouillage (63) étant disposé devant une deuxième découpe (55) ;
ladite bande (61) étant engagée avec ledit premier cliquet de verrouillage (62) et ledit deuxième cliquet de verrouillage (63) ;
ladite bande (61) étant pourvue de crochets (81, 82) attachés à ses deux extrémités respectivement ;
lesdits crochets (81, 82) étant engagés avec ledit premier cliquet de verrouillage (61) et ledit deuxième cliquet de verrouillage (63), respectivement ;
ladite bande (61) étant en contact avec ladite première unité de commande (21), tout en pénétrant dans les première et deuxième découpes (51, 55).

2. Véhicule à selle selon la revendication 1, dans lequel
le support (23) comprend une première paroi latérale (31) située sur un côté opposé de la première ouverture (36) dans le support (23), et
la deuxième unité de commande (22) est disposée entre la première paroi latérale (31) et la première unité de commande (21).

3. Véhicule à selle selon la revendication 2, dans lequel le support (23) comprend en outre la deuxième paroi latérale (32) s'étendant depuis la première paroi latérale (31) vers la première ouverture (36).

4. Véhicule à selle selon la revendication 3, dans lequel
une surface intérieure de la deuxième paroi latérale (32) comprend une première partie en gradin (49) disposée de manière à être dirigée vers la première ouverture (36), et
la première unité de commande (21) est verrouillée sur la première partie en gradin (49).

5. Véhicule à selle selon la revendication 4, dans lequel la première partie en gradin (49) est disposée de manière à affleurer la deuxième unité de commande (22).

6. Véhicule à selle selon l'une quelconque des revendications 3 à 5, dans lequel le support (23) comprend en outre la troisième paroi latérale (33) disposée sur un côté opposé de la deuxième paroi latérale (32) et s'étendant depuis la première paroi latérale (31) vers la première ouverture (36).

7. Véhicule à selle selon la revendication 6, dans lequel
une surface intérieure de la troisième paroi latérale (31) comprend une deuxième partie en gradin (54) disposée de manière à être dirigée vers la première ouverture (36), et
la première unité de commande (21) est verrouillée sur la deuxième partie en gradin (54).

8. Véhicule à selle selon la revendication 7, dans lequel la deuxième partie en gradin (54) est disposée de manière à affleurer la deuxième unité de commande (22).

9. Véhicule à selle selon l'une quelconque des revendications 1 à 8, dans lequel le support (23) comprend en outre une deuxième ouverture (37) ouverte sur un côté supérieur du support (23).

10. Véhicule à selle selon l'une quelconque des revendications 1 à 9, dans lequel la première unité de commande (21) a une taille plus grande que celle de la deuxième unité de commande (22) lorsqu'on regarde depuis la première ouverture (36).

11. Véhicule à selle selon l'une quelconque des revendications 1 à 10, dans lequel la première unité de commande (21) est en contact avec la deuxième unité de commande (22).

12. Véhicule à selle selon l'une quelconque des revendications 1 à 11, comprenant en outre :
un élément intermédiaire (69) disposé entre les première et deuxième unités de commande (21, 22) et prévu comme un élément séparé du support (23).

13. Véhicule à selle selon l'une quelconque des revendications 1 à 12, dans lequel le support (23) est réalisé en résine.

14. Véhicule à selle selon l'une quelconque des revendications 1 à 13, dans lequel la première unité de commande (21) est fixée au support (23).
